# EUROPEAN PATENT APPLICATION

(11) **EP 4 366 379 A1**
(43) Date of publication of application: **08.05.2024**
(21) Application number: 23198416.2
(22) Date of filing: 20.09.2023
(51) Int. Cl.: H04W 36/00, H04W 36/30

(54) **AI/ML ASSISTED CSI-PILOT BASED BEAM MANAGEMENT AND MEASUREMENT REDUCTION**

(30) Priority: 02.11.2022 US 202263382102 P
(71) Applicant: Nokia Technologies Oy, 02610 Espoo (FI)
(72) Inventor: MASRI, Ahmad, Tampere (FI)
(74) Representative: Nokia EPO representatives

(57) **Abstract**

Various techniques are provided for a method including receiving, by a centralized unit (CU) from a distributed unit (DU), a measurement report associated with a user equipment, predicting, by the CU, a pilot-route based on the measurement report, configuring, by the CU, a CSIPilot based mobility for the DU based on the pilot-route, and configuring, by the CU, measurement reporting and a CSIPilot based mobility for the user equipment based on the pilot-route.

## Description

### TECHNICAL FIELD

This description relates to wireless communications.

### BACKGROUND

A communication system may be a facility that enables communication between two or more nodes or devices, such as fixed or mobile communication devices. Signals can be carried on wired or wireless carriers.

An example of a cellular communication system is an architecture that is being standardized by the 3^{rd} Generation Partnership Project (3GPP). A recent development in this field is often referred to as the long-term evolution (LTE) of the Universal Mobile Telecommunications System (UMTS) radio-access technology. E UTRA (evolved UMTS Terrestrial Radio Access) is the air interface of 3GPP's Long Term Evolution (LTE) upgrade path for mobile networks. In LTE, base stations or access points (APs), which are referred to as enhanced Node AP (eNBs), provide wireless access within a coverage area or cell. In LTE, mobile devices, or mobile stations are referred to as user equipments (UE). LTE has included a number of improvements or developments. Aspects of LTE are also continuing to improve.

5G New Radio (NR) development is part of a continued mobile broadband evolution process to meet the requirements of 5G, similar to earlier evolution of 3G and 4G wireless networks. 5G is also targeted at the new emerging use cases in addition to mobile broadband. A goal of 5G is to provide significant improvement in wireless performance, which may include new levels of data rate, latency, reliability, and security. 5G NR may also scale to efficiently connect the massive Internet of Things (IoT) and may offer new types of mission-critical services. For example, ultra-reliable and low-latency communications (URLLC) devices may require high reliability and very low latency.

### SUMMARY

In a general aspect, a device, a system, a non-transitory computer-readable medium (having stored thereon computer executable program code which can be executed on a computer system), and/or a method can perform a process with a method including receiving, by a centralized unit (CU) from a distributed unit (DU), a measurement report associated with a user equipment, predicting, by the CU, a pilot-route based on the measurement report, configuring, by the CU, a CSIPilot based mobility for the DU based on the pilot-route, and configuring, by the CU, measurement reporting and a CSIPilot based mobility for the user equipment based on the pilot-route.

In another general aspect, a device, a system, a non-transitory computer-readable medium (having stored thereon computer executable program code which can be executed on a computer system), and/or a method can perform a process with a method including communicating, by a distributed unit (DU) to a centralized unit (CU), a measurement report associated with a user equipment, receiving, by the DU from the CU, a predicted pilot-route based on the measurement report, receiving, by the DU from the CU, a CSIPilot based mobility configuration based on the predicted pilot-route, and forwarding, by the DU to the user equipment, the CSIPilot based mobility configuration and the predicted pilot-route information.

In yet another general aspect, a device, a system, a non-transitory computer-readable medium (having stored thereon computer executable program code which can be executed on a computer system), and/or a method can perform a process with a method including communicating, by a user equipment to a distributed unit (DU), a measurement report associated with the user equipment, receiving, by the user equipment from the DU, a pilot-route information and a CSIPilot based mobility configuration based on a pilot-route predicted based on the measurement report, and collecting, by the user equipment, layer-1 measurements and not reporting measurements results to the DU based on the CSIPilot based mobility configuration.

The details of one or more examples of embodiments are set forth in the accompanying drawings and the description below. Other features will be apparent from the description and drawings, and from the claims.

### BRIEF DESCRIPTION OF THE DRAWINGS

FIG. 1 is a block diagram of a wireless network according to an example embodiment.
FIG. 2 is a pictorial representation illustrating user equipment movement along a route according to an example embodiment.
FIG. 3 is a block diagram of a signal flow according to an example embodiment.
FIG. 4 is another block diagram of a signal flow according to an example embodiment.
FIG. 5 is a block diagram of a method of operating a centralized unit (CU) according to an example embodiment.
FIG. 6 is a block diagram of a method of operating a distributed unit (DU) according to an example embodiment.
FIG. 7 is a block diagram of a method of operating a user equipment (UE) according to an example embodiment.
FIG. 8 is a block diagram of a machine learning architecture according to an example embodiment.
FIG. 9 is a block diagram of a wireless station or wireless node (e.g., AP, BS, gNB, RAN node, relay node, UE or user device, network node, network entity, DU, CU-CP, CU-CP, ...or other node) according to an example embodiment.

### DETAILED DESCRIPTION

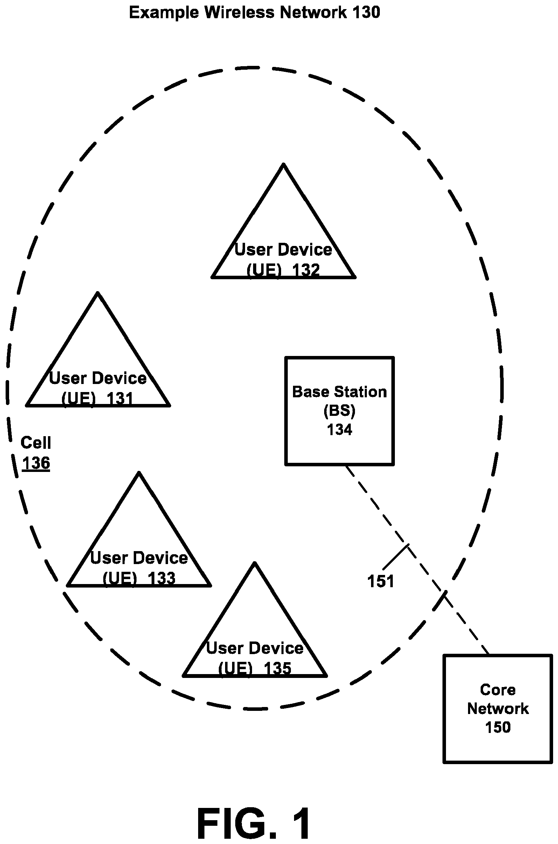

FIG. 1 is a block diagram of a wireless network 130 according to an example embodiment. In the wireless network 130 of FIG. 1, user devices 131, 132, 133 and 135, which may also be referred to as mobile stations (MSs) or user equipments (UEs), may be connected (and in communication) with a base station (BS) 134, which may also be referred to as an access point (AP), an enhanced Node B (eNB), a BS, next generation Node B (gNB), a next generation enhanced Node B (ng-eNB), or a network node. The terms user device and user equipment (UE) may be used interchangeably. A BS may also include or may be referred to as a RAN (radio access network) node, and may include a portion of a BS or a portion of a RAN node, such as (e.g., such as a centralized unit (CU) and/or a distributed unit (DU) in the case of a split BS). At least part of the functionalities of a BS (e.g., access point (AP), base station (BS) or (e)Node B (eNB), BS, RAN node) may also be carried out by any node, server or host which may be operably coupled to a transceiver, such as a remote radio head. BS (or AP) 134 provides wireless coverage within a cell 136, including to user devices (or UEs) 131, 132, 133 and 135. Although only four user devices (or UEs) are shown as being connected or attached to BS 134, any number of user devices may be provided. BS 134 is also connected to a core network 150 via a S1 interface or NG interface 151. This is merely one simple example of a wireless network, and others may be used.

A base station (e.g., such as BS 134) is an example of a radio access network (RAN) node within a wireless network. A BS (or a RAN node) may be or may include (or may alternatively be referred to as), e.g., an access point (AP), a gNB, an eNB, or portion thereof (such as a centralized unit (CU) and/or a distributed unit (DU) in the case of a split BS or split gNB), or other network node. For example, a BS (or gNB) may include: a distributed unit (DU) network entity, such as a gNB-distributed unit (gNB-DU), and a centralized unit (CU) that may control multiple DUs. In some cases, for example, the centralized unit (CU) may be split or divided into: a control plane entity, such as a gNB-centralized (or central) unit-control plane (gNB-CU-CP), and an user plane entity, such as a gNB-centralized (or central) unit-user plane (gNB-CU-UP). For example, the CU sub-entities (gNB-CU-CP, gNB-CU-UP) may be provided as different logical entities or different software entities (e.g., as separate or distinct software entities, which communicate), which may be running or provided on the same hardware or server, in the cloud, etc., or may be provided on different hardware, systems or servers, e.g., physically separated or running on different systems, hardware or servers.

As noted, in a split configuration of a gNB/BS, the gNB functionality may be split into a DU and a CU. A distributed unit (DU) may provide or establish wireless communications with one or more UEs. Thus, a DUs may provide one or more cells, and may allow UEs to communicate with and/or establish a connection to the DU in order to receive wireless services, such as allowing the UE to send or receive data. A centralized (or central) unit (CU) may provide control functions and/or data-plane functions for one or more connected DUs, e.g., including control functions such as gNB control of transfer of user data, mobility control, radio access network sharing, positioning, session management etc., except those functions allocated exclusively to the DU. CU may control the operation of DUs (e.g., a CU communicates with one or more DUs) over a front-haul (Fs) interface.

According to an illustrative example, in general, a BS node (e.g., BS, eNB, gNB, CU/DU, ...) or a radio access network (RAN) may be part of a mobile telecommunication system. A RAN (radio access network) may include one or more BSs or RAN nodes that implement a radio access technology, e.g., to allow one or more UEs to have access to a network or core network. Thus, for example, the RAN (RAN nodes, such as BSs or gNBs) may reside between one or more user devices or UEs and a core network. According to an example embodiment, each RAN node (e.g., BS, eNB, gNB, CU/DU, ...) or BS may provide one or more wireless communication services for one or more UEs or user devices, e.g., to allow the UEs to have wireless access to a network, via the RAN node. Each RAN node or BS may perform or provide wireless communication services, e.g., such as allowing UEs or user devices to establish a wireless connection to the RAN node, and sending data to and/or receiving data from one or more of the UEs. For example, after establishing a connection to a UE, a RAN node (e.g., BS, eNB, gNB, CU/DU, ...) may forward data to the UE that is received from a network or the core network, and/or forward data received from the UE to the network or core network. RAN nodes (e.g., BS, eNB, gNB, CU/DU, ...) may perform a wide variety of other wireless functions or services, e.g., such as broadcasting control information (e.g., such as system information) to UEs, paging UEs when there is data to be delivered to the UE, assisting in handover of a UE between cells, scheduling of resources for uplink data transmission from the UE(s) and downlink data transmission to UE(s), sending control information to configure one or more UEs, and the like. These are a few examples of one or more functions that a RAN node or BS may perform. A base station may also be DU (Distributed Unit) part of IAB (Integrated Access and Backhaul) node (a.k.a. a relay node). DU facilitates the access link connection(s) for an IAB node.

A user device (user terminal, user equipment (UE), mobile terminal, handheld wireless device, etc.) may refer to a portable computing device that includes wireless mobile communication devices operating either with or without a subscriber identification module (SIM) (which may be referred to as Universal SIM), including, but not limited to, the following types of devices: a mobile station (MS), a mobile phone, a cell phone, a smartphone, a personal digital assistant (PDA), a handset, a device using a wireless modem (alarm or measurement device, etc.), a laptop and/or touch screen computer, a tablet, a phablet, a game console, a notebook, a vehicle, a sensor, and a multimedia device, as examples, or any other wireless device. It should be appreciated that a user device may also be (or may include) a nearly exclusive uplink only device, of which an example is a camera or video camera loading images or video clips to a network. A user device may be also MT (Mobile Termination) part of IAB (Integrated Access and Backhaul) node (a.k.a. a relay node). MT facilitates the backhaul connection for an IAB node.

In LTE (as an illustrative example), core network 150 may be referred to as Evolved Packet Core (EPC), which may include a mobility management entity (MME) which may handle or assist with mobility/handover of user devices between BSs, one or more gateways that may forward data and control signals between the BSs and packet data networks or the Internet, and other control functions or blocks. Other types of wireless networks, such as 5G (which may be referred to as New Radio (NR)) may also include a core network (e.g., which may be referred to as 5GC in 5G/NR).

In addition, by way of illustrative example, the various example embodiments or techniques described herein may be applied to various types of user devices or data service types, or may apply to user devices that may have multiple applications running thereon that may be of different data service types. New Radio (5G) development may support a number of different applications or a number of different data service types, such as for example: machine type communications (MTC), enhanced machine type communication (eMTC), massive MTC (mMTC), Internet of Things (IoT), and/or narrowband IoT user devices, enhanced mobile broadband (eMBB), and ultra-reliable and low-latency communications (URLLC). Many of these new 5G (NR) - related applications may require generally higher performance than previous wireless networks.

IoT may refer to an ever-growing group of objects that may have Internet or network connectivity, so that these objects may send information to and receive information from other network devices. For example, many sensor type applications or devices may monitor a physical condition or a status and may send a report to a server or other network device, e.g., when an event occurs. Machine Type Communications (MTC, or Machine to Machine communications) may, for example, be characterized by fully automatic data generation, exchange, processing and actuation among intelligent machines, with or without intervention of humans. Enhanced mobile broadband (eMBB) may support much higher data rates than currently available in LTE.

Ultra-reliable and low-latency communications (URLLC) is a new data service type, or new usage scenario, which may be supported for New Radio (5G) systems. This enables emerging new applications and services, such as industrial automations, autonomous driving, vehicular safety, e-health services, and so on. 3GPP targets in providing connectivity with reliability corresponding to block error rate (BLER) of 10⁻⁵ and up to 1 ms U-Plane (user/data plane) latency, by way of illustrative example. Thus, for example, URLLC user devices/UEs may require a significantly lower block error rate than other types of user devices/UEs as well as low latency (with or without requirement for simultaneous high reliability). Thus, for example, a URLLC UE (or URLLC application on a UE) may require much shorter latency, as compared to an eMBB UE (or an eMBB application running on a UE).

The various example embodiments may be applied to a wide variety of wireless technologies or wireless networks, such as LTE, LTE-A, 5G (New Radio (NR)), cmWave, and/or mmWave band networks, IoT, MTC, eMTC, mMTC, eMBB, URLLC, etc., or any other wireless network or wireless technology. These example networks, technologies or data service types are provided only as illustrative examples.

In a connected mode (e.g., RRC-Connected) with respect to a cell (or gNB or DU), the UE is connected to a BS/gNB, and the UE may receive data, and may send data (based on receiving an uplink grant). Also, in a connected mode, UE mobility may be controlled by the gNB or network. Layer 1 (L1) and/or Layer 2 (L2) inter-cell mobility is a technology of interest for mobility enhancement. In contrast to Layer 3 (L3) mobility procedures where the handover between two cells is decided by RRC layer, L1 and/or L2 inter-cell mobility is performed by the MAC layer terminated in the Distributed Unit (DU).

In L1 and/or L2 inter-cell mobility also known as L1 Triggered Mobility (LTM), the network can decide to configure the potential target cells for L1 and/or L2 inter-cell mobility based on the measurement report received from a connected UE. The configuration for L1 and/or L2 inter-cell mobility can be sent to the UE by the network (e.g., CU, DU, and the like). After confirming the radio resource control (RRC) reconfiguration to the network, the UE can report periodically the L1 beam measurements of the serving cell and candidate target cells. In response to determining that there is a target candidate cell having a better radio link beam measurement than the serving cell, e.g., L1-RSRP of target beam measurement is greater than L1-RSRP of serving beam measurement plus Off (e.g., a Time-to-Trigger (TTT) time) the serving cell can send a MAC Control Element (MAC CE) or a L1 message configured to trigger the cell change (e.g., handover) to the target candidate cell. The handover from the serving cell to a target cell can be executed by the UE.

A benefit of L1 inter-cell mobility compared to baseline handover and conditional handover is that the interruption during the handover execution can be reduced substantially because the UE does not need to perform higher layer (RRC, PDCP) reconfiguration and for some scenarios the UE can perform RACH less to connect the target cell.

The time and frequency resources that can be used by the UE to report CSI can be controlled by the gNB. CSI may consist of Channel Quality Indicator (CQI), precoding matrix indicator (PMI), CSI-RS resource indicator (CRI), SS/PBCH Block Resource indicator (SSBRI), layer indicator (LI), rank indicator (RI), L1-RSRP or L1-SINR. Each Reporting Setting CSI-ReportConfig can be associated with a single downlink BWP (e.g., indicated by higher layer parameter BWP-Id) given in the associated CSI-ResourceConfig for channel measurement and can include the parameter(s) for one CSI reporting band including, for example, a codebook configuration including codebook subset restriction, time-domain behavior, frequency granularity for CQI and PMI, measurement restriction configurations, and the CSI-related quantities to be reported by the UE such as the layer indicator (LI), L1-RSRP, L1-SINR, CRI, and SSBRI (SSB Resource Indicator). Each CSI Resource Setting CSI-ResourceConfig can include a configuration of a list of S≥1 CSI Resource Sets (given by higher layer parameter CSI-RS-ResourceSetList), where the list can include references to either or both of NZP CSI-RS resource set(s) and SS/PBCH block set(s) and/or the list can include references to CSI-IM resource set(s). Each CSI Resource Setting can be located in the DL BWP identified by the higher layer parameter BWP-id, and CSI Resource Settings linked to a CSI Report Setting can have the same DL BWP.

Mobility management can be a process to guarantee the service-continuity during the mobility by minimizing, for example, call drops, RLFs, unnecessary handovers, and ping-pong. In addition, for applications with stringent QoS requirements (e.g., reliability, latency, and the like) the QoE can be sensitive to the handover performance. Therefore, that mobility management should avoid unsuccessful handover and reduce the latency during handover procedure. However, for the conventional method, it can be challenging for a trial-and-error-based scheme to achieve nearly zero-failure handover.

As discussed above, inter-cell mTRP transmission and L1-centric inter-cell mobility can rely on the L1 beam measurement report (e.g., CSI Measurement Report) of the serving and non-serving cells. The UE can report both serving and non-serving cells as a part of the periodic L1 beam measurement reporting. Periodicity of the L1 beam measurement reporting can be up to 5ms. Comparing the minimum reporting periodicity of cell/beam quality reports for L3 mobility (e.g., 120ms), the network can collect the measurements from the UE more often. However, a problem can be that L1 beam reporting increases the signaling overhead at the system as well as UE power consumption. The example implementations described herein can reduce L1 beam reporting. Therefore, the example implementations described herein can decrease the signaling overhead at the system and decrease UE power consumption amongst other improvements.

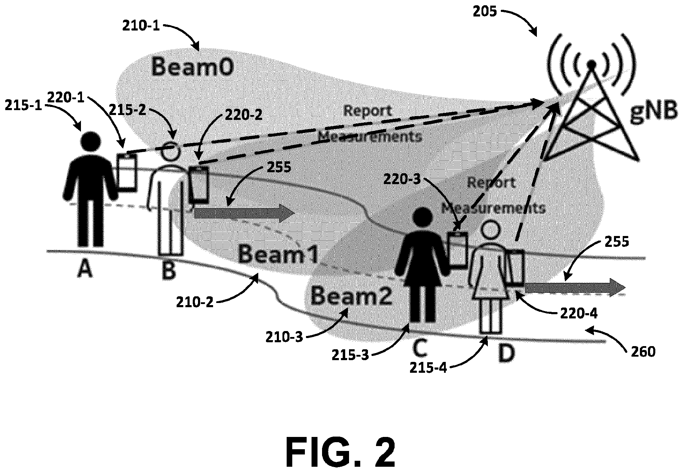

FIG. 2 is a pictorial representation illustrating user equipment movement along a route according to an example embodiment. As shown in FIG. 2, a network can include a gNB 205 configured to generate beams 210-1, 210-2, 210-3, 210-4. The beams 210-1, 210-2, 210-3, 210-4 can be used to serve UEs along (e.g., a portion) of a route 260 (e.g., a highway, a street, a path, a product flow, movement within a building, a manufacturing flow, and the like). For example, the route 260 can be a travel movement of a vehicle with a UE (e.g., a passenger carrying a UE). For example, the route 260 can be along movement of a user carrying a UE in a building (e.g., the gNB 205 can be a small-cell(s), a micro-cell(s), a femto-cell(s), and/or the like within the building). For example, the route 260 can be along movement of a robot (e.g., an IoT device) in a manufacturing facility (e.g., the gNB 205 can be a small-cell(s), a micro-cell(s), a femto-cell(s), and/or the like within the facility). These are just a few examples of a route and example implementations are not limited there to.

As shown in FIG. 2, a user 215-1, 215-2, 215-3, 215-4 carrying a UE 220-1, 220-2, 220-3, 220-4 can be travelling along route 260 in a direction corresponding to arrow 255 (e.g., from A to B to C to D). The UE 220-1, 220-2, 220-3, 220-4 can be configured to periodically report measurements (e.g., in an uplink (UL)) to gNB 205. In an example implementation, the gNB 205 can operate as (and/or include) at least one of a DU and/or a CU.

Users (e.g., user 215-1, 215-2, 215-3, 215-4 carrying a UE 220-1, 220-2, 220-3, 220-4) may follow same path (e.g., a same route, street, railway, and the like). Typically, the users are still subject to individual CSI measurement reporting. However, the users may be experiencing similar environment conditions over the same path. Therefore, duplicated and/or unnecessary measurements can be reported from different users over time over the same path (e.g., as shown in FIG. 2). Example implementations can utilize the historically reported measurements from a subset of users (e.g., user 215-3 and user 215-4) for introducing measurements reporting reduction and/or beam management for users following a same path (e.g., user 215-1 and user 215-2).

Example implementations describe inter-cell beam management methods configured to reduce CSI measurement overhead (e.g., L1 beam reporting) and avoid mobility failures by utilizing near and/or long-averaged history CSI measurements experiences of reported CSI measurements from a subset of selected pilot UE(s) over a specific path for the purpose of measurement reporting reduction and beam management for other UE(s) (e.g., follower UE(s)). Follower UE(s) can be ML based (e.g., predicted) UE(s) that follow a comparable path (route, trajectory, street, railway line, bus line, highway, and/or the like) and speed compared to a previously tracked pilot UE(s).

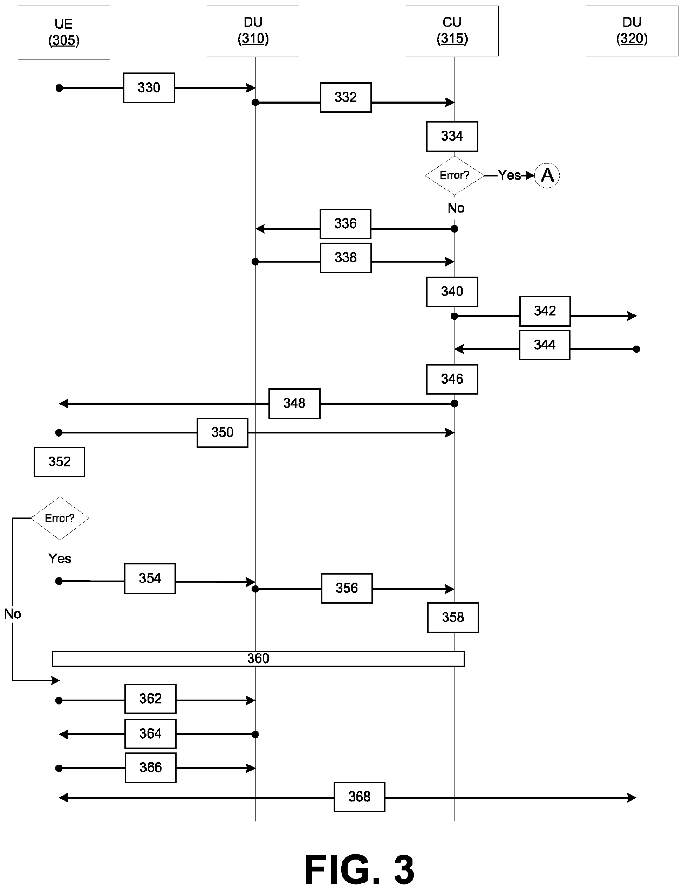

FIG. 3 is a block diagram of a signal flow according to an example embodiment. As shown in FIG. 3, a wireless system can include a UE 305 and network devices including, for example, a distributed unit (DU) 310, a distributed unit (DU) 320, and a centralized unit (CU) 315. The UE 305 and the DU 310, 320can be configured to communicate (e.g., wirelessly communicate) between each other while communication between DU 310, 320 and the CU 315 can be through a wired network (alternatively or additionally wireless or optical fiber). For example, the UE 305 and the DU 310 can be configured to communicate messages, signals and/or the like between each other. For example, the UE 305, the DU 310, 320, and/or the CU 315 can be configured to communicate using a wireless standard as described above.

The UE 305 can communicate a message 330 (e.g., a report or signal) to the DU 310. The message 330 can include a measurement report based on pre-configuration received from the CU 315 though DU 310 at earlier time. The DU 310 can communicate a message 332 (e.g., a report or signal) to the CU 315. In an example implementation the message 332 can be used to forward the message 330. In an example implementation the message 330, 332 can include a measurement report. The measurement report can include information associated with wireless signals received by the UE 305 from the DU 310 and/or the DU 320.

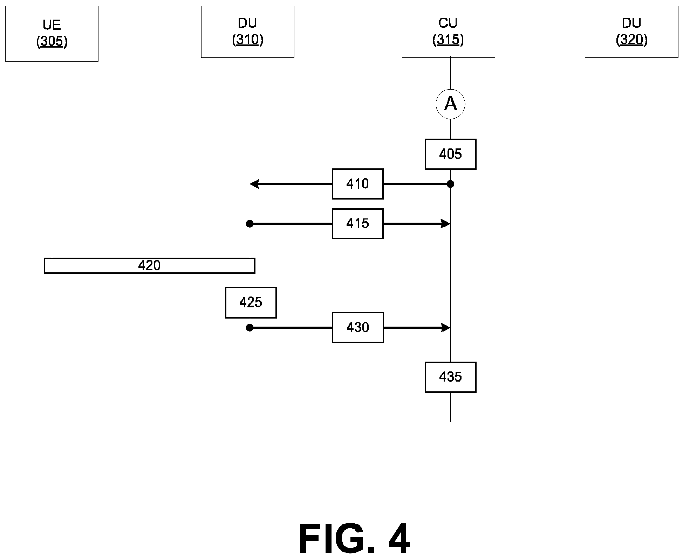

In response to receiving the message 332, in block 334, the CU 315 can predict a pilot-route. The CU 315 can predict the pilot-route using a trained machine learning (ML) model. An example trained ML model is described in more detail below. The trained ML model can be configured to at least predict a key index corresponding to an entry in a database (e.g., a pilot-route tracking database). The CU 315 can be configured to determine if an error occurred when the CU 315 performed the pilot-route prediction. For example, the error can be associated with whether or not a valid key index was predicted. For example, if no key index was predicted or a default key index indicating no pilot route exists was predicted, an error can exist. In other words, the CU 315 can be configured to determine whether or not the predicting of the pilot-route identifies a valid pilot route (e.g., a valid key index is predicted). In response to the CU 315 determining that no valid pilot route has been identified (e.g., predicted), processing continues at block 405 (described below with regard to FIG. 4).

Otherwise, the CU 315 can look-up and read (e.g., fetch) pilot-route information from the database (e.g., a pilot-route tracking database) based on the predicted pilot-route (e.g., the predicted key index). In an example implementation, the error can be based on whether or not pilot-route information is returned in response to the look-up and read from the database (e.g., a pilot-route tracking database). The database can be located in the CU 315 and/or any communicatively communicated network node. In either option, the CU 315 can fetch the pilot-route information using the predicted key index.

Then, the CU 315 can communicate a message 336 (e.g., a configuration message or signal) to the DU 310. The message 336 can include a UE (e.g., UE 305) context setup request. For example, the message 336 can be configured to request a CSIPilot based mobility enabled request. For example, based on the fetched pilot-route information, the CU 315 can configure the cell(s) under DU 310 and other DUs (e.g., DU 320) according to the pilot-route information. The CU 315 can send the UE 305 context setup request to the DU 310 and the other DUs (e.g., DU 320). This operation cab be performed by the CU 315 to activate inter-cell beam management/L1 inter-cell mobility/L1 Triggered Mobility. The CU 315 can send message 336 as, for example, a request to the DU 310 to enable the CSIPilot based mobility. In an example implementation, the UE 305 can continue L1 measurements collection and reporting while CSIPilot based mobility is being established.

The message 336 can include the pilot-route information read (e.g., fetched) from the database (e.g., a pilot-route tracking database). In response to receiving the message 336, the DU 310 can determine whether or not CSIPilot based mobility is enabled. In response to determining CSIPilot based mobility is enabled, the DU 310 can communicate a message 338 (e.g., a response message or signal) to the CU 315. In response to determining CSIPilot based mobility is not enabled, the DU 310 can disable CSIPilot based mobility and communicate a message 338 (e.g., a response message or signal) indicating CSIPilot based mobility is disabled to the CU 315. The message 338 can include a UE context setup response (e.g., a DU to CU container). The message 338 can include an acknowledgement that CSIPilot based mobility is enabled. In the example implementation, the DU 310 can be the DU serving UE 305. In other words, the DU 310 can be the serving DU.

In response to receiving the message 338, in block 340, the CU 315 can be configured to determine (read or fetch) DU(s) listed in the pilot-route information. The DU(s) listed in the pilot-route information can be DU(s) that may be involved with a handover with the UE 305. For example, the CU 315 can be configured to determine a next DU(s) from the pilot-route information. The next DU(s) from the pilot-route information can be the likely next DU for the handover with the UE 305.

Then, the CU 315 can communicate a message 342 (e.g., a configuration message or signal) to the DU 320. The message 342 can include a UE (e.g., UE 305) context setup request. For example, the message 342 can be configured to request a CSIPilot based mobility enabled request. The message 342 can include the pilot-route information read (e.g., fetched) from the database (e.g., a pilot-route tracking database). In response to receiving the message 342, the DU 320 can determine whether or not CSIPilot based mobility is enabled. As an example, message 342 is a message the CU 315 communicates as a UE context setup request to other non-serving DU(s) (e.g., DU 320). This is performed by CU 315 to activate inter-cell beam management/L1 inter-cell mobility/L1 Triggered Mobility with regard to the other non-serving DU(s) and UE 305. In other words, the message 342 can be a request to the other non-serving DU(s) to enable CSIPilot based mobility.

In response to determining CSIPilot based mobility is enabled, the DU 320 can communicate a message 344 (e.g., a response message or signal) to the CU 315. In response to determining CSIPilot based mobility is not enabled, the DU 320 can disable CSIPilot based mobility and communicate a message 344 (e.g., a response message or signal) indicating CSIPilot based mobility is disabled to the CU 315. The message 344 can include a UE context setup response (e.g., a DU to CU container). The message 344 can include an acknowledgement that CSIPilot based mobility is enabled (e.g., with regard to the other non-serving DU(s)).

In response to receiving the message 344, in block 346, the CU 315 can be configured to generate an RRC configuration(s). The RRC configuration(s) can include a measurement reporting configuration(s) for L1 cell/beam change(s) and/or a configuration(s) of prepared cells/beams (e.g., configured for CSIPilot based mobility enabled). For example, the CU 315 can generate the RRC Configuration message to communicate to UE 305. Message 348 can include, for example, a configuration for measurement reporting for L1 cell/beam change(s) in addition to a configuration regarding the prepared (e.g., for handover) DU(s). The configurations for CSIPilot mobility can include, for example, enable trigger, optional reporting specific configuration such as periodicity, and the like).

Then, the CU 315 can communicate a message 348 (e.g., a configuration message or signal) to the UE 305 (e.g., via DU 310). The message 348 can include the RRC configuration(s). In addition to (or based on) what is generated in block 346, the RRC configuration(s) can include a request to enable (e.g., if configured to and not already enabled) CSIPilot based mobility including the pilot-route information. The pilot-route information can indicate what candidate possible target beams the UE 305 could switch to in the course of moving over the associated route. For example, message 348 can include, for example, an indication for enabling the CSIPilot based mobility and route information (e.g., next expected beams/cells to switch to/handover to), in addition to enabling L1 Triggering Mobility (LTM).

In response to receiving the message 348, the UE 305 can configure the UE 305 for L1-layer measurements and reporting based on the received RRC measurement configuration(s). Next the UE 305 can communicate a message 350 (e.g., a report or signal) to the CU 315 (e.g., via DU 310). The message 350 can include an indication (e.g., a signal) that the RRC configuration(s) is complete.

Then, in block 352 the UE 305 perform L1 measurement collection. However, in example implementations, resource control measurements (e.g., the L1 measurement collection) are collected (e.g., making or performing measurements) and the UE 305 does not report the collected resource control measurements to the DU 310 based on the CSIPilot mobility configuration. For example, in example implementations, there is no need for the UE 305 to report measurement to the DU 310 because the DU 310 can use the pilot-route information to determine what beam(s) is the next beam the UE 305 will connect to. In addition, during a handover operation, the UE 305 can send an indication regarding the next beam the DU 310 (or whether the switch is to another DU (e.g., DU 320) is to switch the UE 305 to. In other words, according to example implementations, from the UE 305 perspective, the serving DU (e.g., DU 310) will forward the to the UE 305 the pilot-route based mobility enablement from CU 315, so the UE 305 is to continue measuring (e.g., layer-1 measurements). However, the UE 305 will not report the measurements.

In example implementations, the not reporting of the measurements can continue as long the indication from the pilot-route info about next best beam matching the UE's 305 local beam's identity of the best measurements results. Accordingly, prior to performing a handover (or as an element of a handover), in example implementations, the UE can determine whether or not a beam match error has occurred. In response to determining a beam match error has occurred, processing continues at block 354. In response to determining a beam match error has not occurred, processing continues at block 362. In an example implementation, a beam match error can exist if the next beam as indicated by the pilot-route information does not match the next beam as determined by the UE 305 based on the collected measurements (e.g., the Layer-1 measurement collection, etc.). For example, the UE 305 can identify the best beam/cell Id from the measured signals and compare the best beam/cell Id to the best next beams/cells Id from the route information that is given from the network. No beam match error occurs if the measured Id matches the Id from given route information. If the best beam/cell Id is equal to serving beam/cell or another target beam/cell Id from the route-pilot information (e.g., no beam match error) then the UE 305 can continue measurements without reporting and continue with CSIPilot based mobility until a beam match error occurs.

For example, the UE 305 can identify one of a next beam or a next cell in one of a beam change or a handover operation, the UE305 can determine whether the next beam or the next cell is included and matched in the CSIPilot based mobility, and then in response to determining the next best measured beam identity or the next best measured cell identity is included and matched in the CSIPilot based mobility (e.g., no beam match error), the UE 305 can communicate to the DU 310 and/or DU 320 a beam change indication.

Further, in response to determining the next best measured beam identity or the next best measured cell identity is not included in the CSIPilot based mobility (e.g., a beam match error exists), the UE 305 can communicate to the DU 310 a message including information indicating a beam match error associated with the user equipment, The UE 305 can receive from the DU 310 another CSIPilot based mobility based on another pilot-route predicted in response to the message including information indicating the beam match error, and then the UE 305 can make layer-1 measurements and not report the layer-1 measurements to the DU 310 and/or DU 320 based on the another CSIPilot based mobility. In an example implementation, the message including information indicating a beam match error can include information associated with the predicted pilot-route, a cell/beam identification associated with the predicted pilot-route, a cell/beam identification associated with a serving cell/beam, cell/beam measurements, and time period associated with the beam match error.

In response to determining there is no beam match error and measured beam Id which matches the target beam Id from the pilot-route information is different than the current serving beam Id, then, the UE 305 can communicate a message 362 (e.g., a report or signal) to the DU 310. The message 362 can include a beam change indication. The beam change indication can include at least a beam index. The beam index can identify a beam included in the pilot-route information. The beam change indication does not need to include other beam information because the pilot-route information can include an amount of information to identify the beam that the UE 305 will move to in the handover.

Then, the DU 310 can communicate a message 364. The message 364 can include a MAC CE for beam/cell change. The MAC CE or a L1 message can be configured to trigger the cell change (e.g., handover) to the target cell. Then, the UE 305 can communicate a message 366 (e.g., a report or signal) to the DU 310 or the UE 305 and the DU 320 can communicate messages 368. If the beam being changed to is in the same cell, the message 366 can include an L1 and/or L2 acknowledgement. If the beam being changed to is not in the same cell, the messages 368 can include random access messages between the UE 305 and the DU 320. In addition, the UE 305 can continue following the route information with DU 320 as the another, next, or new serving cell.

If there is a beam match error, the UE 305 can communicate a message 354 (e.g., a report or signal) to the DU 310. The DU 310 can communicate a message 356 (e.g., a report or signal) to the CU 315. In an example implementation the message 356 can be used to forward the message 354. In an example implementation the message 354, 356 can include a beam mismatch report (e.g., information indicating a beam match error). The beam mismatch report can include information associated with the predicted pilot-route, a beam mismatch report ID, a cell identification associated with the predicted pilot-route, a cell identification associated with a serving cell, cell measurements, and time period associated with the beam match error.

In response to receiving message 356, in block 358, the CU 315 can be configured to update a validity metric associated with the pilot-route information. In block 358 the CU can be further configured to determine whether the validity metric exceeds a threshold value. The validity metric can be based on a number of beam match errors. The validity metric can be based on time and/or based on a number of beam match errors. For example, each time a beam match error occurs for a predicted pilot-route, the validity metric can be incremented (e.g., incremented by one (1)). For example, if a time between a last beam match error and a current exceed a threshold amount of time (e.g., 10 minutes, 1 hour, 1 day, and the like), the validity metric can be reset (e.g., set to zero (0)). In response to determining the validity metric exceeds a threshold value (e.g., a maximum number of beam match errors within a period of time), the CU 315 can be configured to remove the pilot-route from a database (e.g., a pilot-route tracking database). The CU 315 can be further configured to predict another, or new pilot-route associated with the UE 305.

In response to predicting another, or new pilot-route associated with the UE 305, in block 360, the UE 305 can be configured for measurement reporting based on the another, or new pilot-route with the UE 305 and the CU 315 performing any updates based on the implementations described above. In response to failing to predict another, or new pilot-route associated with the UE 305, in block 360, the UE 305 can be configured for measurement reporting using normal L1 measurement and reporting techniques.

FIG. 4 is another block diagram of a signal flow according to an example embodiment. As discussed above, in response to the CU 315 determining that no valid pilot route has been identified (e.g., predicted), processing continues at block 405. In block 405, a candidate pilot-route can be added to a database (e.g., a pilot-route tracking database). Then a tracking process for the UE 305 can begin. For example, a new (e.g., unique) key index can be added to the database (e.g., a pilot-route tracking database).

Then, the CU 315 can communicate a message 410 (e.g., a configuration message, a request, or signal) to the DU 310. The message 410 can include a UE (e.g., UE 305) tracking request. For example, the message 410 can be configured to request a CSIPilot based mobility tracking request. The message 410 can include information associated with a UE (e.g., UE 305) for tracking a route of the UE for use in a tracking process to generate a pilot-route information to be added to the database (e.g., a pilot-route tracking database). The message 410 can include a periodicity regarding the tracking.

In response to receiving the message 410, the DU 310 can initiate CSIPilot based mobility tracking. CSIPilot based mobility tracking can include saving reporting messages associated with a UE (e.g., the UE 305). In response to initiating CSIPilot based mobility tracking, the DU 310 can communicate a message 415 (e.g., a response message or signal) to the CU 315. The message 415 can include an acknowledgement that CSIPilot based mobility tracking associated with the UE (e.g., the UE305) has begun.

Then, in block 420, the UE 305 and the DU 310 operate to measure and report L1 and/or L2 mobility measurements (e.g., based on the configuration associated with message 348). In block 425, the DU 310, stores the reported L1 and/or L2 mobility measurements. Periodically (e.g., based on the periodicity included in message 410), the DU 310 can communicate a message 430 (e.g., a reporting message or signal) to the CU 315. The message 430 can include the stored (or portions of the stored) L1 and/or L2 mobility measurements. In response to receiving the message 430, the CU 315, in block 435, can update the database (e.g., a pilot-route tracking database) with the L1 and/or L2 mobility measurements. Updating the database can include formatting the L1 and/or L2 mobility measurements based on a format of the data in the database (e.g., a pilot-route tracking database). Formatting the data can include reading location data and formatting of the location data. Formatting the data can include reading signal (e.g., power) data and formatting of the signal data. Updating the database can include storing L1 and/or L2 mobility measurements in relation to the key index generated for the candidate pilot-route.

In an example implementation, the database (e.g., a pilot-route tracking database) can be configured to store and update pilot-route tracking. Accordingly, the database can, for example, for each selected pilot-route the network can store a copy of a history of reported CSI measurements, successfully visited beams Ids (trajectory, best SSB-RS indexes and Physical Cell Ids (PCIs)), optional information about speed, approximate and/or exact location or target destination. The above-mentioned validity metric can be stored in the database and used to track the validity of a pilot-route over the course of time. In another example implementation for a group of selected pilot-route the database can store a copy of reported and averaged CSI measurements, successfully visited beams Ids (trajectory), optional information about average speed, approximate and/or exact location or target destination.

The above-mentioned validity metric can be stored in the database and used to track the validity of a pilot-route over the course of time. In an example implementation, a pilot-route can be associated with a pilot UE. A pilot UE can be a UE(s) that has been tracked over a specific path and used to generate a pilot route. The pilot UE can be a UE that has been tracked over a path without experiencing performance issues such as mobility related failures. Then the UE and their corresponding tracked data is saved in the pilot-route tracking data base.

In an example implementation, the prediction of the follower UE(s) and matching the follower UE(s) to specific pilot-path pair(s) from the database could be based on but not limited to, the initial CSI reported measurements from the follower UE (e.g., translated to beam Ids traversed so far), user speed, user location and/or optional user direction/final destination (e.g., over rail way line, bus line, curse path, highway, and/or the like). The successful usage of the pilot UE reported CSI history reported measurements for executing mobility for other followers UE(s) can prolong the validity of a pilot UE's reported CSI measurements for leading other follower UE(s). By contrast, if the follower UE(s) experience mobility issues using the pilot UE's CSI history reported measurements, then the pilot UE can be declared invalid and associated pilot-routes can be removed from the list of pilots-path pairs and the follower UE(s) can fall back to normal CSI measurements reporting and could be added later to possible list of pilot-route pairs.

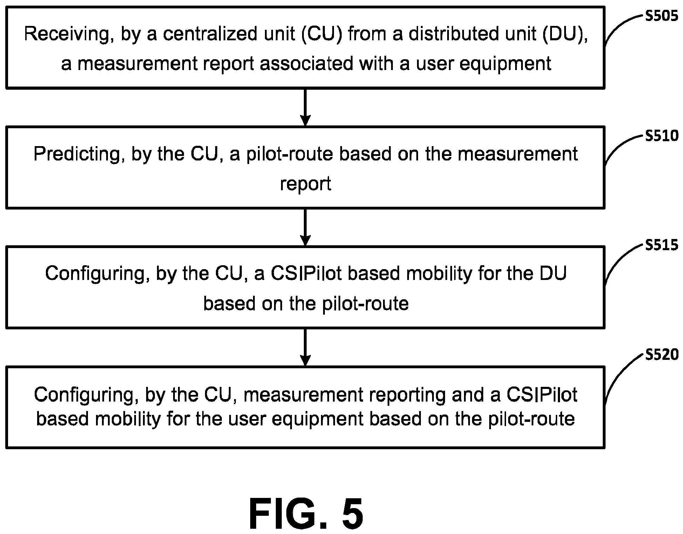

Example 1. FIG. 5 is a block diagram of a method of operating a centralized unit (CU) according to an example embodiment. As shown in FIG. 5, in step S505 receiving, by a centralized unit (CU) from a distributed unit (DU), a measurement report associated with a user equipment. In step S510 predicting, by the CU, a pilot-route based on the measurement report. In step S515 configuring, by the CU, a CSIPilot based mobility for the DU based on the pilot-route. In step S520 configuring, by the CU, measurement reporting and a CSIPilot based mobility for the user equipment based on the pilot-route.

Example 2. The method of Example 1, wherein the predicting of the pilot-route can include predicting a key index corresponding to an entry in a database, and configuring the CSIPilot based mobility for the DU can include reading pilot-route information from the database based on the key index and communicating the pilot-route information to the DU.

Example 3. The method of Example 1 can further include determining, by the CU, a candidate target DU based on the pilot-route and configuring, by the CU, a CSIPilot based mobility and a possible handover for the candidate target DU based on the pilot-route.

Example 4. The method of Example 1 can further include determining, by the CU, a next beam of the DU based on the pilot-route and configuring, by the CU, a possible beam switch for the next beam within the DU based on the pilot-route.

Example 5. The method of Example 1 can further include configuring, by the CU, a CSIPilot based mobility for other candidate target DU's based on the pilot-route information.

Example 6. The method of Example 1 can further include generating, by the CU, a configuration message including the pilot-route information, a measurement reporting configuration and information associated with DU's that include the CSIPilot based mobility and communicating, by the CU to the user equipment through the serving DU, the configuration message.

Example 7. The method of Example 1 can further include receiving, by the CU from the DU, a message including information indicating a beam match error associated with the user equipment and updating, by the CU, a validity metric associated with the pilot-route.

Example 8. The method of Example 7 can further include determining, by the CU, whether the validity metric exceeds a threshold value and in response to determining the validity metric exceeds the threshold value, removing, by the CU, the pilot-route from a database, predicting, by the CU, another, or new pilot-route associated with the user equipment, and configuring, by the CU, measurement reporting for the user equipment based on the another, or new pilot-route.

Example 9. The method of Example 7, wherein the validity metric can be based on time and based on a number of beam match errors.

Example 10. The method of Example 1 can further include determining, by the CU, whether the predicting of the pilot-route identifies a valid pilot route and in response to determining that the pilot-route is not a valid pilot route, tracking, by the CU, the user equipment and generating, by the CU, a candidate pilot-route based on the tracking.

Example 11. The method of Example 10, wherein the tracking of the user equipment can include communicating, by the CU to the DU, a tracking request for the user equipment and receiving, by the CU from the DU, a tracking measurements associated with the user equipment.

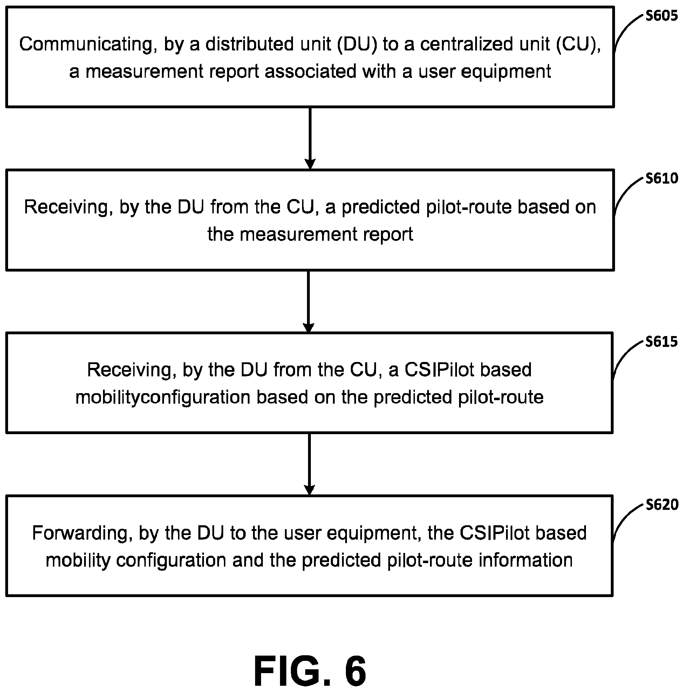

Example 12. FIG. 6 is a block diagram of a method of operating a distributed unit (DU) according to an example embodiment. As shown in FIG. 6, in step S605 communicating, by a distributed unit (DU) to a centralized unit (CU), a measurement report associated with a user equipment. In step S610 receiving, by the DU from the CU, a predicted pilot-route based on the measurement report. In step S615 receiving, by the DU from the CU, a CSIPilot based mobility configuration based on the predicted pilot-route. In step S620 forwarding, by the DU to the user equipment, the CSIPilot based mobility configuration and the predicted pilot-route information.

Example 13. The method of Example 12 can further include communicating, by the DU to the CU, a message including information indicating a beam match error associated with the user equipment, receiving, by the DU from the CU, another, or new CSIPilot based mobility configuration based on another, or new pilot-route predicted in response to the message including information indicating the beam match error, and configuring, by the DU, measurement reporting and another, or new CSIPilot based mobility configuration for the user equipment based on the another, or new CSIPilot based mobility configuration.

Example 14. The method of Example 13 can further include receiving, by the DU from the user equipment, a message including information associated with the predicted pilot-route, a cell/beam identification associated with the predicted pilot-route, a cell/beam identification associated with a serving cell/beam, cell/beam measurements, and time period associated with the beam match error.

Example 15. The method of Example 12 can further include receiving, by the DU from the CU, a next beam of the DU as determined by the CU based on the pilot-route and receiving, by the DU from the CU, a possible beam switch for the next beam within the DU based on the pilot-route.

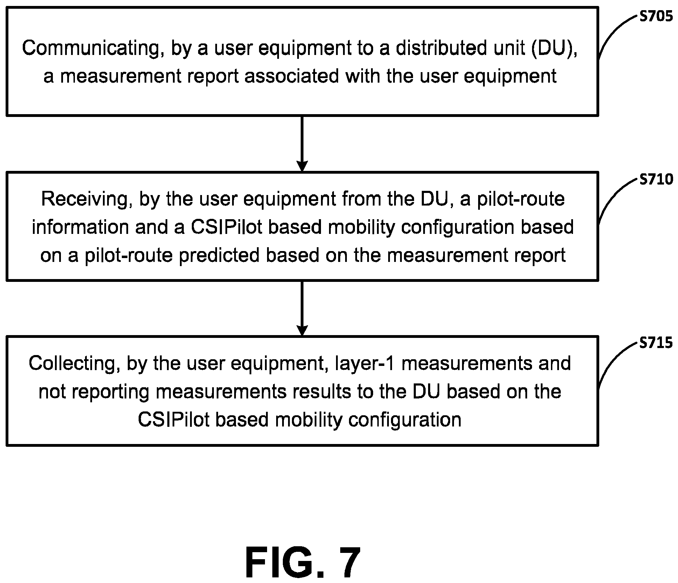

Example 16. FIG. 7 is a block diagram of a method of operating a user equipment (UE) according to an example embodiment. As shown in FIG. 7, in step S705 communicating, by a user equipment to a distributed unit (DU), a measurement report associated with the user equipment. In step S710 receiving, by the user equipment from the DU, a pilot-route information and a CSIPilot based mobility configuration based on a pilot-route predicted based on the measurement report. In step S715 collecting, by the user equipment, layer-1 measurements and not reporting measurements results to the DU based on the CSIPilot based mobility configuration.

Example 17. The method of Example 16, wherein the CSIPilot based mobility can include route information including at least one of a next beam and/or a next cell.

Example 18. The method of Example 16 can further include identifying, by the user equipment, one of a next beam or a next cell in one of a beam change or a handover operation. determining, by the user equipment whether the next beam or the next cell is included and matched in the CSIPilot based mobility, and in response to determining the next best measured beam identity or the next best measured cell identity is included and matched in the CSIPilot based mobility, communicating, by the user equipment to the DU, a beam change indication.

Example 19. The method of Example 18 can further include in response to determining the next best measured beam identity or the next best measured cell identity is not included in the CSIPilot based mobility, communicating, by the user equipment to the DU, a message including information indicating a beam match error associated with the user equipment, receiving, by the user equipment from the DU, another, or new CSIPilot based mobility based on another, or new pilot-route predicted in response to the message including information indicating the beam match error, and making, by the user equipment, layer-1 measurements and not reporting the layer-1 measurements to the DU based on the another, or new CSIPilot based mobility.

Example 20. The method of Example 19, wherein the message including information indicating a beam match error can include information associated with the predicted pilot-route, a cell/beam identification associated with the predicted pilot-route, a cell/beam identification associated with a serving cell/beam, cell/beam measurements, and time period associated with the beam match error.

Example 21. A method can include any combination of one or more of Example 1 to Example 20.

Example 22. A non-transitory computer-readable storage medium comprising instructions stored thereon that, when executed by at least one processor, are configured to cause a computing system to perform the method of any of Examples 1-21.

Example 23. An apparatus comprising means for performing the method of any of Examples 1-21.

Example 24. An apparatus comprising at least one processor and at least one memory including computer program code, the at least one memory and the computer program code configured to, with the at least one processor, cause the apparatus at least to perform the method of any of Examples 1-21.

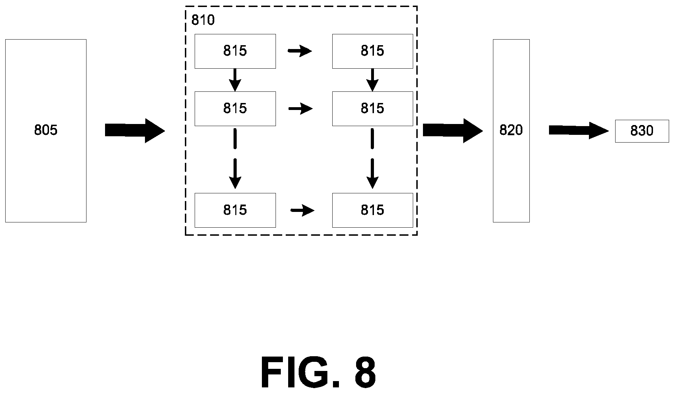

In an example implementation, the use of ML based method to predict pilot-route information (e.g., matching one new UE's measurements to already tracked and recorded measurements from one or more UEs over a same (or substantially similar) path). However, example implementations can use non-MI, and/or non-AI techniques to find the pilot-route information. An example, but not limiting, ML model that could be utilized to perform the matching operation could be using a Long Short-Term Memory (LSTM) type of model as illustrated in FIG. 8.

FIG. 8 is a block diagram of a machine learning (ML) architecture according to an example embodiment. As shown in FIG. 8, the ML architecture includes an input layer 805, LSTM layers 810, an activation function 820 and an output 830. The LSTM layers 810 can include a plurality of LSTM networks.

In an example implementation, the LSTM networks 815 can be applied to predict a pilot-route index for database fetching. LSTM networks 815 can be preferred for time-series prediction due to the capabilities of learning long-term relations in data and can be configured to solve the vanishing gradient problem in a recurrent neural network (RNN) by introducing special gates (e.g., forget gate, input gate, and the like.). The input layer 805 of the ML architecture can include UE measurement reports, for example, RSRP, RSRQ and/or SINR measurements. This information can be used for the LSTM networks 815 to determine channel degradation through time and can be used for initial prediction. As long as the model prediction is correct (verified by the UE), the network may not need the use UE measurement reports. The input layer 805 can be configured to identify the start of the path based on the UE's initial measurement reporting and the input layer 805 can be configured to predict the best possible pilot-route information based on the start path and use the best possible pilot-route as input to the LSTM layers 810.

The activation function 820 can be a softmax function. A softmax function can be configured to convert a vector of K real values into a vector of K real values that sum to 1. The input values can be positive, negative, zero, or greater than one, but the softmax transforms the input values into values between 0 and 1, so the input values can be interpreted as probabilities. The activation function 820 can be configured to output the index of the best pilot-route that matches the UE initial reported measurements.

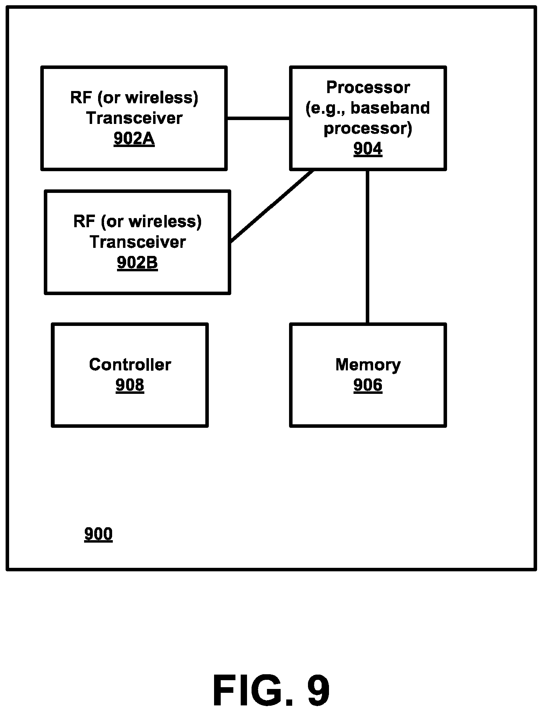

FIG. 9 is a block diagram of a wireless station 900 or wireless node or network node 900 according to an example embodiment. The wireless node or wireless station or network node 900 may include, e.g., one or more of an AP, BS, gNB, RAN node, relay node, UE or user device, network node, network entity, DU, CU-CP, CU-UP, ... or other node according to an example embodiment.

The wireless station 900 may include, for example, one or more (e.g., two as shown in FIG. 9) radio frequency (RF) or wireless transceivers 902A, 902B, where each wireless transceiver includes a transmitter to transmit signals and a receiver to receive signals. The wireless station also includes a processor or control unit/entity (controller) 904 to execute instructions or software and control transmission and receptions of signals, and a memory 906 to store data and/or instructions.

Processor 904 may also make decisions or determinations, generate frames, packets or messages for transmission, decode received frames or messages for further processing, and other tasks or functions described herein. Processor 904, which may be a baseband processor, for example, may generate messages, packets, frames or other signals for transmission via wireless transceiver 902 (902A or 902B). Processor 904 may control transmission of signals or messages over a wireless network, and may control the reception of signals or messages, etc., via a wireless network (e.g., after being down-converted by wireless transceiver 902, for example). Processor 904 may be programmable and capable of executing software or other instructions stored in memory or on other computer media to perform the various tasks and functions described above, such as one or more of the tasks or methods described above. Processor 904 may be (or may include), for example, hardware, programmable logic, a programmable processor that executes software or firmware, and/or any combination of these. Using other terminology, processor 904 and transceiver 902 together may be considered as a wireless transmitter/receiver system, for example.

In addition, referring to FIG. 9, a controller (or processor) 908 may execute software and instructions, and may provide overall control for the station 900, and may provide control for other systems not shown in FIG. 9, such as controlling input/output devices (e.g., display, keypad), and/or may execute software for one or more applications that may be provided on wireless station 900, such as, for example, an email program, audio/video applications, a word processor, a Voice over IP application, or other application or software.

In addition, a storage medium may be provided that includes stored instructions, which when executed by a controller or processor may result in the processor 904, or other controller or processor, performing one or more of the functions or tasks described above.

According to another example embodiment, RF or wireless transceiver(s) 902A/902B may receive signals or data and/or transmit or send signals or data. Processor 904 (and possibly transceivers 902A/902B) may control the RF or wireless transceiver 902A or 902B to receive, send, broadcast or transmit signals or data.

The example embodiments are not, however, restricted to the system that is given as an example, but a person skilled in the art may apply the solution to other communication systems. Another example of a suitable communications system is the 5G system. It is assumed that network architecture in 5G will be quite similar to that of the LTE-advanced. 5G is likely to use multiple input - multiple output (MIMO) antennas, many more base stations or nodes than the LTE (a so-called small cell concept), including macro sites operating in co-operation with smaller stations and perhaps also employing a variety of radio technologies for better coverage and enhanced data rates.

It should be appreciated that future networks will most probably utilize network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications this may mean node operations may be carried out, at least partly, in a server, host or node operationally coupled to a remote radio head. It is also possible that node operations will be distributed among a plurality of servers, nodes or hosts. It should also be understood that the distribution of labor between core network operations and base station operations may differ from that of the LTE or even be non-existent.

Example embodiments of the various techniques described herein may be implemented in digital electronic circuitry, or in computer hardware, firmware, software, or in combinations of them. Example embodiments may be implemented as a computer program product, i.e., a computer program tangibly embodied in an information carrier, e.g., in a machine-readable storage device or in a propagated signal, for execution by, or to control the operation of, a data processing apparatus, e.g., a programmable processor, a computer, or multiple computers. Embodiments may also be provided on a computer readable medium or computer readable storage medium, which may be a non-transitory medium. Embodiments of the various techniques may also include embodiments provided via transitory signals or media, and/or programs and/or software embodiments that are downloadable via the Internet or other network(s), either wired networks and/or wireless networks. In addition, embodiments may be provided via machine type communications (MTC), and also via an Internet of Things (IOT).

The computer program may be in source code form, object code form, or in some intermediate form, and it may be stored in some sort of carrier, distribution medium, or computer readable medium, which may be any entity or device capable of carrying the program. Such carriers include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers.

Furthermore, example embodiments of the various techniques described herein may use a cyber-physical system (CPS) (a system of collaborating computational elements controlling physical entities). CPS may enable the embodiment and exploitation of massive amounts of interconnected ICT devices (sensors, actuators, processors microcontrollers, ...) embedded in physical objects at different locations. Mobile cyber physical systems, in which the physical system in question has inherent mobility, are a subcategory of cyber-physical systems. Examples of mobile physical systems include mobile robotics and electronics transported by humans or animals. The rise in popularity of smartphones has increased interest in the area of mobile cyber-physical systems. Therefore, various embodiments of techniques described herein may be provided via one or more of these technologies.

A computer program, such as the computer program(s) described above, can be written in any form of programming language, including compiled or interpreted languages, and can be deployed in any form, including as a stand-alone program or as a module, component, subroutine, or other unit or part of it suitable for use in a computing environment. A computer program can be deployed to be executed on one computer or on multiple computers at one site or distributed across multiple sites and interconnected by a communication network.

Method steps may be performed by one or more programmable processors executing a computer program or computer program portions to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer, chip or chipset. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in, special purpose logic circuitry.

To provide for interaction with a user, embodiments may be implemented on a computer having a display device, e.g., a cathode ray tube (CRT) or liquid crystal display (LCD) monitor, for displaying information to the user and a user interface, such as a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Example embodiments may be implemented in a computing system that includes a back-end component, e.g., as a data server, or that includes a middleware component, e.g., an application server, or that includes a front-end component, e.g., a client computer having a graphical user interface or a Web browser through which a user can interact with an embodiment, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

While certain features of the described embodiments have been illustrated as described herein, many modifications, substitutions, changes and equivalents will now occur to those skilled in the art. It is, therefore, to be understood that the appended claims are intended to cover all such modifications and changes as fall within the true spirit of the various embodiments.

## Claims

1. An apparatus comprising:
means for receiving, by a centralized unit, CU, from a distributed unit, DU, a measurement report associated with a user equipment;
means for predicting, by the CU, a pilot-route based on the measurement report;
means for configuring, by the CU, a CSI Pilot based mobility for the DU based on the pilot-route; and
means for configuring, by the CU, measurement reporting and a CSI Pilot based mobility for the user equipment based on the pilot-route.

2. The apparatus of claim 1, wherein
the predicting of the pilot-route includes predicting a key index corresponding to an entry in a database, and
configuring the CSI Pilot based mobility for the DU includes reading pilot-route information from the database based on the key index and communicating the pilot-route information to the DU.

3. The apparatus of claim 1 or claim 2, further comprising:
means for determining, by the CU, a candidate target DU based on the pilot-route; and
means for configuring, by the CU, a CSI Pilot based mobility and a possible handover for the candidate target DU based on the pilot-route.

4. The apparatus of any of claim 1 to claim 3, further comprising:
means for determining, by the CU, a next beam of the DU based on the pilot-route; and
means for configuring, by the CU, a possible beam switch for the next beam within the DU based on the pilot-route.

5. The apparatus of any of claim 1 to claim 4, further comprising:
means for generating, by the CU, a configuration message including the pilot-route information, a measurement reporting configuration and information associated with DU's that include the CSI Pilot based mobility; and
means for communicating, by the CU to the user equipment through the serving DU, the configuration message.

6. The apparatus of any of claim 1 to claim 5, further comprising:
means for receiving, by the CU from the DU, a message including information indicating a beam match error associated with the user equipment; and
means for updating, by the CU, a validity metric associated with the pilot-route.

7. The apparatus of any of claim 1 to claim 6, further comprising:
means for determining, by the CU, whether the predicting of the pilot-route identifies a valid pilot route; and
in response to determining that the pilot-route is not a valid pilot route,
means for tracking, by the CU, the user equipment, and
means for generating, by the CU, a candidate pilot-route based on the tracking.

8. The apparatus of claim 7, wherein the tracking of the user equipment includes:
communicating, by the CU to the DU, a tracking request for the user equipment; and
receiving, by the CU from the DU, a tracking measurements associated with the user equipment.

9. An apparatus comprising:
means for communicating, by a distributed unit, DU, to a centralized unit, CU, a measurement report associated with a user equipment;
means for receiving, by the DU from the CU, a predicted pilot-route based on the measurement report;
means for receiving, by the DU from the CU, a CSI Pilot based mobilityconfiguration based on the predicted pilot-route; and
means for forwarding, by the DU to the user equipment, the CSI Pilot based mobility configuration and the predicted pilot-route information.

10. The apparatus of claim 9, further comprising:
means for communicating, by the DU to the CU, a message including information indicating a beam match error associated with the user equipment;
means for receiving, by the DU from the CU, another CSI Pilot based mobility configuration based on another pilot-route predicted in response to the message including information indicating the beam match error; and
means for configuring, by the DU, measurement reporting and another CSI Pilot based mobility configuration for the user equipment based on the another CSI Pilot based mobility configuration.

11. The apparatus of any of claim 9 to claim 10, further comprising:
means for receiving, by the DU from the CU, a next beam of the DU as determined by the CU based on the pilot-route; and
means for receiving, by the DU from the CU, a possible beam switch for the next beam within the DU based on the pilot-route.

12. An apparatus comprising:
means for communicating, by a user equipment to a distributed unit, DU, a measurement report associated with the user equipment;
means for receiving, by the user equipment from the DU, a pilot-route information and a CSI Pilot based mobility configuration based on a pilot-route predicted based on the measurement report; and
means for collecting, by the user equipment, layer-1 measurements and not reporting measurements results to the DU based on the CSI Pilot based mobility configuration.

13. The apparatus of claim 12, wherein the CSI Pilot based mobility includes route information including at least one of a next beam and/or a next cell.

14. The apparatus of claim 12 or claim 13, further comprising:
means for identifying, by the user equipment, one of a next beam or a next cell in one of a beam change or a handover operation;
means for determining, by the user equipment whether the next beam or the next cell is included and matched in the CSI Pilot based mobility; and
means for communicating, by the user equipment to the DU, a beam change indication, in response to determining the next best measured beam identity or the next best measured cell identity is included and matched in the CSI Pilot based mobility.

15. The apparatus of any of claim 12 to claim 14, wherein the message including information indicating a beam match error includes information associated with the predicted pilot-route, a cell/beam identification associated with the predicted pilot-route, a cell/beam identification associated with a serving cell/beam, cell/beam measurements, and time period associated with the beam match error.
